# EUROPEAN PATENT SPECIFICATION

(11) **EP 1 960 175 B1**
(45) Date of publication and mention of the grant of the patent: **25.02.2015**
(21) Application number: 06829944.5
(22) Date of filing: 06.11.2006
(51) Int. Cl.: B29C 33/38

(54) **SOL-GEL PROCESS FOR THE MANUFACTURE OF MOULDS FOR PHOTOCATALYTIC PROCESSES**
SOL-GEL-VERFAHREN FÜR DIE HERSTELLUNG VON FORMWERKZEUGEN FÜR PHOTOKATALYTISCHE PROZESSE
PROCÉDÉ SOL-GEL POUR LA FABRICATION DE MOULES POUR PROCÉDÉS PHOTOCATALYTIQUES

(30) Priority: 06.12.2005 IT MI20052333
(43) Date of publication of application: 27.08.2008
(73) Proprietor: P.C.R. S.r.l., 20881 Bernareggio (Monza Brianza) (IT)
(72) Inventor: PANZERI, Luca, I-23781 Lomagna (IT); COSTA, Lorenzo, 27048 Sommo (DE)
(74) Representative: Biggi, Cristina
(86) International application number: PCT/EP2006/068139
(87) International publication number: WO 2007/065766

(56) References cited:
- EP-A- 1 346 961
- JP-A- 2 083 227
- US-A1- 4 389 428
- US-A1- 6 099 792

## Description

This invention relates to a sol-gel process for the manufacture of moulds suitable for the formation of materials using photocatalysis processes.

This invention also relates to a pultrusion process, an extrusion process and a moulding process in which a mould manufactured in accordance with the abovementioned method is provided.

In particular the invention lies in the field of the processing of various materials, including composite materials and silicones, and pultrusion, extrusion and moulding processes are of particular interest in that sector.

As is known, composite materials (or reinforced plastics) are obtained through the combination of a thermohardening resin, such as polyesters or epoxides, with a reinforcement based on glass fibre, carbon fibre, fabric or other material. This association imparts particular mechanical strength properties to the material which can be utilized in a wide range of industrial sectors.

As far as silicones are concerned, these are organosilicon compounds comprising polymers based on a silicon-oxygen chain and organic functional groups linked to the silicon atoms; their special feature is that they are particularly resistant to temperature, chemical attack and oxidation, and are excellent electrical insulators. Silicones may be subdivided into various application classes, including liquids, emulsions, lubricants, resins, elastomers. They obviously have very wide application extending from adhesives to lubricants, insulating agents and prostheses.

It is known that in the main industrial processes, and in particular in the processes of pultrusion (for composite materials), extrusion and moulding, both composite materials and silicones undergo a cross-linking treatment known as polymerization which generally takes place through thermal means, in particular by placing the material in contact with a heated mould in which it undergoes polymerization and plastic deformation and in which it takes up the final or semi-final shape of the end product.

In the known art moulds are generally made of metal, because they have to withstand high mechanical loads as a result of the plastic deformation stresses on the material being formed, and thermal loads due to the repeated thermal polymerization cycles which they perform.

Moulds of this type are disadvantageously characterized by a particularly high mass; as a consequence of this moulds made of metal create more than insignificant logistical difficulties.

Furthermore, the manufacture of moulds from metal requires mechanical finishing machining of the rough piece downstream from the operation of casting or plastically deforming the piece in order to obtain a mould which is consistent with a desired shape. Mechanical machining of the mould takes place through the removal of swarf, generally by milling, or, in some cases, by turning or other machining, and is as a result very costly in that it requires complex equipment, particularly when moulds of large size are being machined.

As a result the manufacture of metal moulds has the further disadvantage that it requires rather long machining times; this is another factor having an adverse effect on the costs of manufacture of such moulds, which also reflects the various disadvantages affecting moulds made of metal.

As mentioned previously, there are various processes in industry in which the use of moulds is required; specifically the processes of pultrusion, extrusion and moulding will also be described below with reference to the equipment used. These processes, which are known, constitute the main but not the only methods of producing and forming composite and silicone materials in accordance with processes according to this invention.

Pultrusion is an operation used to manufacture composite materials and is the production process normally used in the production of pipes, articles having a hollow cross section and various sections, in which continuous layers of reinforced fibre are impregnated with catalysed resin and then caused to pass through a heated metal mask using an appropriate machine which "draws" the composite material. A continuous line of product which can then be cut and dispatched for subsequent processing is obtained in this way.

The extrusion process on the other hand consists of feeding the material which has to be shaped, for example a silicone, which is then thrust, for example by means of a piston or continuous thrust means comprising for example rotating screws, through a die having a shape which reproduces the cross section of the required section. Again in this case a continuous line of generally semi-finished product which is then sent to stations for subsequent processing is produced.

Moulding on the other hand consists of placing the material which has to be moulded, for example a silicone, in a mould forcing it to fill it and adopt its shape. The material may for example be injected into the mould while it is in the liquid state. Heating of the mould takes place in parallel with polymerization of the material.

JP02083227 refers to a method for manufacturing transparent molds by casting a liquid sol into a matrix having a desired structure, the sol being then gelled, dried and sintered to obtain a mold consisting of silica glass. This document is the base for the preamble of claim 1.

In each of these processes polymerization takes place through a thermal effect and requires a very precise time, which can in some cases be excessive. This has an adverse effect in terms of low productivity and relatively high production costs.

As an alternative to the processes of thermohardening plastics material described, photocatalytic processes for achieving polymerization and, if appropriate, cross-linking of the same, with acceptable results, are known, at least at laboratory level.

Unfortunately these processes have not become industrially established because of intrinsic difficulties with the processes themselves. For example, in a photocatalytic process one appreciable difficulty is the nature of the mould, which must have appreciable optical transparency, and mechanical and thermomechanical strength properties. Not to mention a shape appropriate for the purpose, which might require appreciable sophistication.

In this situation the technical task underlying this invention is to provide a process for the manufacture of moulds which are capable of overcoming the abovementioned disadvantages.

In the context of this technical task it is an important object of the invention to provide a process for the manufacture of moulds which makes it possible to reduce process times and as a' consequence to increase productivity, even substantially in particular in processes of pultrusion, extrusion and moulding using such moulds, achieving the effect of reducing production costs.

Another object of the invention is to provide a process for the manufacture of moulds of smaller mass than conventional metal moulds, while maintaining good mechanical and thermal strength.

Another object of the invention is to provide a process for the manufacture of moulds which eliminates, or at least reduces as far as possible, the need to carry out mechanical machining on the moulds obtained and therefore which reduces the production costs for the moulds themselves.

The technical task specified and the objects specified are substantially achieved through a sol-gel process for the manufacture of moulds having at least one portion transparent to UV rays according to one or more of the technical arrangements claimed below.

Thus the object of the following invention comprises a sol-gel process for the manufacture of moulds having at least one portion transparent to UV rays as claimed below.

The subject of the invention is a sol-gel process for the manufacture of moulds having at least one portion transparent to UV rays, which comprises the following stages as listed in claim 1.

In the process of the invention the outer surface (2b) of the said at least one transparent portion (2a) of the mould (2) being manufactured can face the external environment in the operating condition of the mould (2) and allow UV rays to pass towards the interior, while the inner surface (2c) of the said at least one transparent portion (2a) of the mould (2) is in the operating condition in contact with the product being formed and polymerized.

In the process according to the invention the said at least one insert (5) can be incompressible.

In the process according to the invention the said at least one insert (5) can be cylindrical.

In the process according to the invention the stage d) of gelling the sol can comprise an operation of extraction of the said at least one insert (5).

In the process according to the invention the extraction of the said at least one insert (5) can take place at a predetermined time in' the gelling stage to prevent the formation of cracks in the forming gel.

In the process according to the invention the container (1) can be caused to rotate to assist extraction of the said at least one insert (5) making use of the centrifugal forces acting on the forming gel.

In the process according to the invention the container (1) can be caused to rotate axially so that, under the effect of the centrifugal force, the sol adopts the shape of the container bounded externally by the inner surface of the container and internally by the equipotential surface at right angles to the centrifugal force field.

In the process according to the invention the container (1) can comprise a plurality of inserts (5).

In the process according to the invention stage b) can be preceded by the following stages:
- preparation of an aqueous or water/alcohol suspension containing at least one metal alkoxide,
- effecting hydrolysis of the above suspension, obtaining the sol.

In the process according to the invention a phase c') in which the solvent is replaced with an aprotic solvent can be included between stage c) and stage d).

In the process according to the invention a stage c") in which the gel is placed in an autoclave and subjected to a flow of inert gas can be included between stage c') and stage d).

In the process according to the invention a stage d') of depressurization of the autoclave with a consequent escape of vapours, with possible recovery of the said vapours, can be included between stage d) and stage e).

In the process according to the invention a stage d") which consists of flowing an inert gas through the autoclave containing the gel can be included between stage d') and stage e).

In the process according to the invention a stage d"') which comprises cooling the dried gel and removing it from the autoclave can be included between stage d") and stage e).

In the process according to the invention the aprotic solvent used in stage c') can be selected from the group comprising acetone, dioxan and hydrofuran.

In the process according to the invention stage a) also can comprise the operation of positioning and attaching at least one insert (5) within the chamber (3).

In the process according to the invention the mould (2) can be wholly transparent to UV rays.

In the process according to the invention the mould (2) can comprise a portion (2a) which is transparent to at least UV rays and a portion (9) which is not transparent to UV rays.

In the process according to the invention the mould (2) can comprise a half-mould 2a) which is transparent to at least UV rays and a half-mould (9) which is not transparent to UV rays.

In the process according to the invention a surface (9a) of the said portion (9) which is not transparent to UV rays, facing the product being formed, can be coated with a reflecting material (10).

In the process according to the invention the reflecting material (10) can be an aluminium film (10).

A further subject of the invention is a pultrusion process, which comprises the following stages:
- preparing a predetermined number of continuous fibres,
- providing a mould (2) which is transparent to UV rays using the procedure according to Claim 1, the said mould (2) having a through cavity (4) shaped to plastically deform the said continuous fibres,
- impregnating the said continuous fibres with a suitable preferably thermohardening resin,
- causing the said continuous fibres so impregnated to pass through the mould (2),
- polymerizing the said continuous fibres through UV rays as they pass through the mould (2).

A further subject of the invention is an extrusion process, which comprises the following stages:
- preparing a material for extrusion,
- providing a mould (2) which is transparent to at least UV rays using the process according to Claim 1, the said mould (2) having a through cavity (4) shaped to plastically deform the material being extruded,

- providing thrust means to force the material being extruded to pass through the mould (2),
- application of a thrust in the direction of the mould (2) to the material being extruded,
- forcing the material being extruded to pass through the mould (2) imposing plastic deformation on the material being extruded as it passes through the mould (2),
- polymerizing the material by exposing it to UV rays as it passes through the mould (2).

The material being extruded can belong to the group comprising materials based on silicone and rubber.

A preferably thermohardening catalyst can be added to the material being extruded to polymerize the material being extruded when it is exposed to UV rays.

A further subject of the invention is a moulding process, which comprises the following stages:
- preparing a material for moulding,
- providing a mould (2) comprising at least two mating portions of which at least one is transparent to UV rays using the process according to Claim 1, the said mould (2) defining internally a cavity (4) which can be wholly exposed to UV rays,
- joining the said portions of the mould (2),
- inserting the material to be moulded within the cavity (4),
- polymerizing the material by exposing it to UV rays while it is within the cavity (4).

The material being moulded can belong to the group comprising materials based on silicone and rubber, or thermohardening materials.

Preferably a thermohardening catalyst can be added to the material being moulded to polymerize the material being moulded when it is exposed to UV rays.

The moulding process to the invention can comprise injection or compression moulding.

A description of a preferred embodiment of a sol-gel process for the manufacture of moulds having at least one portion transparent to UV rays is described below by way of example but not exclusively in accordance with the appended drawings in which:
- Figure 1 illustrates a view in cross section of a container for the manufacture of a mould according to the invention,
- Figure 2 illustrates a view in cross section of a mould according to a preferred embodiment,
- Figures 3 to 5 illustrate a view in cross section of a mould according to further embodiments,
- Figure 6 illustrates views in cross section of a mould according to a further embodiment,
- Figure 7 illustrates' a view in cross section of two containers for the manufacture of the mould in Figure 6,
- Figures 8 and 9 illustrate a view in cross section of a mould according to further embodiments.

A preferred embodiment of a sol-gel process for the manufacture of moulds having at least one portion transparent to UV rays according to the invention comprises the following stages:
a) providing a container 1 having the negative shape with at least one transparent portion 2a of the mould 2 which is to be manufactured and internally defining a chamber 3,
b) filling chamber 3 with a colloidal suspension (sol),
c) effecting gelling of the sol, obtaining the so-called gel,
d) heating the gel and a corresponding solvent in an autoclave for a programmed period of time consequently reaching predetermined temperature and pressure values substantially higher than the critical values for the solvent, and extrusion of that solvent giving rise to drying of the gel,
e) densification and/or sintering of the dried gel by heating to a predetermined temperature, preferably higher than the temperature specified in stage d), with the consequent formation of a vitreous body transparent to at least UV rays.

The colloidal suspension (sol) in stage b) is prepared in a preceding stage a') by mixing one or more precursors containing metal alkoxides with a solvent. This solvent may be water or a water/alcohol mixture, and gives rise to an aqueous or water/alcohol suspension respectively.

Preferably, also, the metal in each precursor is an element belonging to groups 3, 4, 5 of the Periodic system. The metals generally used for the formation of a precursor are silicon and, sometimes, aluminium.

In order to be able to carry out stage b) it is also necessary that hydrolysis of the suspension produced in stage a') be carried out in a further preceding stage a''), yielding the sol. This is generally achieved by the addition of an acid or basic catalyst to the suspension. This catalyst is preferably an aqueous solution of hydrochloric acid.

It should also be added that once hydrolysis is complete, before starting gelling, it is possible to add a colloidal suspension of an oxide of a metal present in a precursor of the suspension in paragraph b) to the sol. For example, in the case where a precursor comprising or constituting a silicon alkoxide is used, a colloidal suspension prepared by mixing water, pyrolytic silica and an acid or a base may be added to the sol. This also makes it possible to adjust the pH value of the suspension; it is in fact known that pH is one of the factors having the greatest influence on the gelling stage, in particular the duration of that stage and the strength of the gel obtained. In fact it has been found experimentally that increasing the pH value brings about a reduction in the time required for gelling, achieving a period of the order of a few minutes, and in parallel with this imparts greater strength to the gel obtained, thus making it possible to manufacture products of larger dimensions. In detail the improved results in terms of strength of the gel are obtained from a sol having a pH value of between 3 and 6. In order to increase the pH of the suspension it may be brought into solution in a controlled gradual way with for example ammonium hydroxide.

The sol so obtained can then be poured into container 1 and proceed to the gelling stage. This stage takes place through maintaining the sol at a temperature below 40°C for a time varying from a few minutes to several hours. The gel so obtained has a gelatinous consistency and a porous structure and is immersed in the solvent, in particular water or a water/alcohol mixture as described previously.

In order to be able to proceed to stage d) of drying of the gel it is necessary to provide for replacement of the solvent in that this drying preferably takes place at a temperature and pressure above the critical temperature and pressure for the solvent, and, when excessive water is present, achieving these pressures and temperatures would be extremely harmful to the integrity of the gel, given the agressivity of water towards the gel at high temperatures. In this respect, during a stage c') between the gelling stage c) and the subsequent stage d) of heating chamber 3 and drying the gel, the solvent present in chamber 3 and in the pores of the gel is replaced by an aprotic solvent, for example by washing the gel. This aprotic solvent is preferably selected from the group comprising acetone, dioxan and hydrofuran and is decidedly less aggressive towards the gel at high temperatures than water.

The gel so prepared, with a level of solvent compatible with the specifications for the solvent extraction autoclave in question at supercritical conditions or "quasi-supercritical" conditions as described in the known art (Joseph G. Van Lierop et al. - US 4,806,328) is placed directly in the autoclave. The gel is then subjected to a further stage c") of passing through an inert gas, preferably nitrogen, at the pressure necessary to achieve a total pressure greater than the critical pressure for the aprotic solvent when the temperature exceeds the critical temperature for that aprotic solvent. Exceeding the critical conditions in this way has the advantage that a gel which better matches the desired dimensions is obtained in comparison with a gel which is obtained by drying at conditions below the critical conditions.

As an alternative, during stage c") the inert gas is passed through at the pressure necessary to achieve total pressure and temperature values below the critical values for the aprotic solvent previously introduced, but compatible with the rules for extraction under subcritical conditions described in the known art (US 5,966,832; US 5,875,564; US 5,473,826; US 5,343,633; PCT/EP 2003/014759).

The gel is then heated; after this heating the aprotic solvent evaporates substantially completely and drying of the gel takes place.

Subsequently in a stage d') the autoclave is depressurized with the consequent escape of vapours. These vapours may be recovered where this is considered to be convenient or necessary.

In a subsequent stage d") an inert gas, preferably nitrogen, is caused to flow through the autoclave containing the gel in order to remove residual traces of vapours. In a subsequent stage d'") the dried gel is cooled and removed from the autoclave. In order to impart the desired transparency properties to the dried gel, a final sintering stage e) is provided in which the gel is heated to a predetermined temperature, preferably higher than the temperature at which drying stage d) takes place, in which vitrification of the gel occurs. Said stage e) is generally effected by placing the gel in a furnace, not illustrated, and increasing the temperature of the furnace above 100°C and up to even 900°C in an atmosphere which may also contain oxygen, used to calcine the gel. After this treatment, gases containing chlorine or its precursors may be introduced in order to eliminate any residual hydroxides in the gel, reaching a temperature of between 100°C and 1250°C. The temperature of the furnace is finally increased to between 900°C and 1650°C in such a way as to bring about densification of the gel and therefore its vitrification, obtaining a mould having a vitreous consistency which is transparent to at least UV rays.

Some of the characteristics of the device used to effect the abovementioned process will now be described.

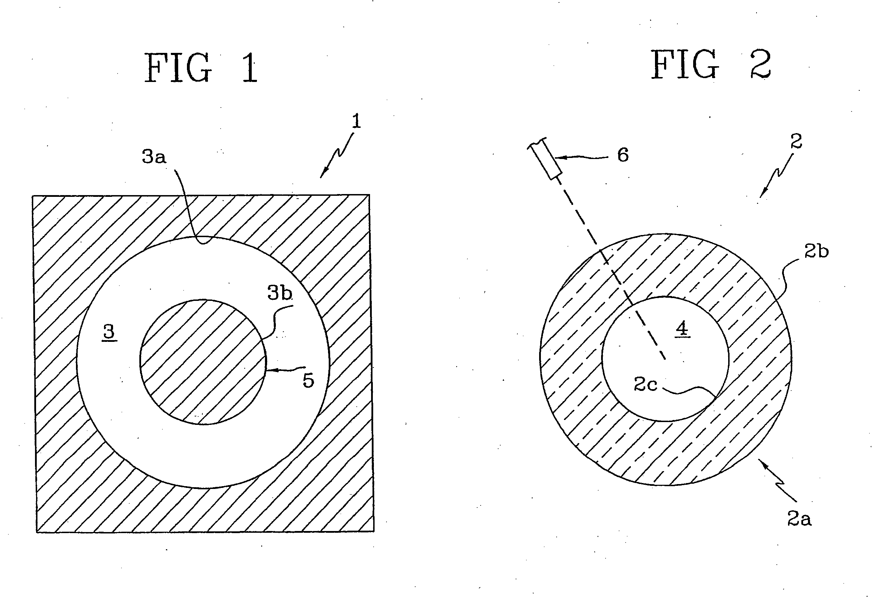

As mentioned previously, the performance of stage a) requires the provision of a container 1, illustrated in Figure 1, which defines within it a chamber 3. The sol is then poured into chamber 3.

Advantageously chamber 3 is a negative of the final shape or a portion of the final shape of mould 2 which it is desired to obtain, with dimensions which are suitably enlarged to take into account the progressive shrinkage acting on the sol during the gelling stage and subsequent shrinkage associated with the stages of drying and densification and/or sintering. Mould 2 is illustrated in Figure 2.

In detail, chamber 3 has at least a first surface 3a which is substantially of a shape which is a negative of a corresponding outer surface 2b of at least one transparent portion 2a of mould 2 being manufactured, and at least one second surface 3b which is substantially a negative of at least one corresponding inner surface 2c of said at least one transparent portion 2a of mould 2 being manufactured. This inner surface 2c defines a cavity 4, preferably a through cavity, within the mould.

In relation to Figure 2, in the working condition, outer surface 2b of the said at least one transparent portion 2a of mould 2 being manufactured faces the external environment and allows the passage of UV rays towards the interior, while inner surface 2c of the said at least one transparent portion 2a of mould 2 is in contact with the material which has to be formed and polymerized.

In detail, means may be provided externally to mould 2 to generate UV rays. These means for the generation of UV rays must face mould 2, in particular the outer surface 2b of transparent portion 2a. In this way, in the working condition, the UV rays will be directed towards mould 2, and by virtue of the transparency of mould 2 to UV rays will pass through it reaching internal cavity 4. The material which has to be shaped and polymerized, generally a composite material or a silicone, is suitably introduced into cavity 4 to undergo polymerization through the UV rays generated as just described. The material which has to be formed and polymerized is then exposed to the UV rays while it is within the mould. Advantageously polymerization takes place through exposing the material which has to be shaped and polymerized while it is in movement through cavity 4 of mould 2. It is however conceivable that the flow of material which has to be formed and polymerized may be temporarily stopped in order to permit completion of the polymerization process.

In the non-working condition, cavity 4 is empty and is therefore not filled with any material which has to be formed.

Coupling means, not illustrated, may also be provided to secure mould 2 to a device, for example a pultrusion, extrusion or moulding device.

One of the most critical operations for manufacturing moulds according to the invention is the production of cavity 4, for reasons which will be clarified below.

In order to make the said cavity 4 (see for example Figures 1-5) it is necessary to use an insert 5 which has to be attached to container 1, in particular within chamber 3. In general, in order to make cavity 4 at least one insert 5 which has to be attached to the container to define the second surface 3b of chamber 3 is required. In this respect stage a) also comprises a stage of positioning and attaching insert 5 within chamber 3.

According to a first embodiment illustrated in Figures 1 and 2, mould 2 is made as a single block. This mould 2, produced using the sol-gel process described previously, is wholly transparent to UV rays and has an outer cylindrical surface 2b and an inner surface 2c which is also cylindrical. In order to make this mould 2, first surface 3a and second surface 3b of chamber 3 are cylindrical. Within chamber 3 there is also housed an insert 5 defining a second surface 3b which is substantially a negative of the inner surface 2c of mould 2 which has to be manufactured. Insert 5 is preferably incompressible so as to withstand the compression forces generated by the surrounding sol during the gelling stage.

In general it is preferable to use cylindrical inserts 5 to generate cylindrical cavities 4 within mould 2 and therefore passages of constant cross section for the material being polymerized which passes through it. As an alternative it is possible to use inserts 5 of a frustoconical shape, not illustrated, which can be more easily removed from the gel but which can only be used in circumstances where a cavity 4 having a variable cross section for passage of the material being polymerized is necessary.

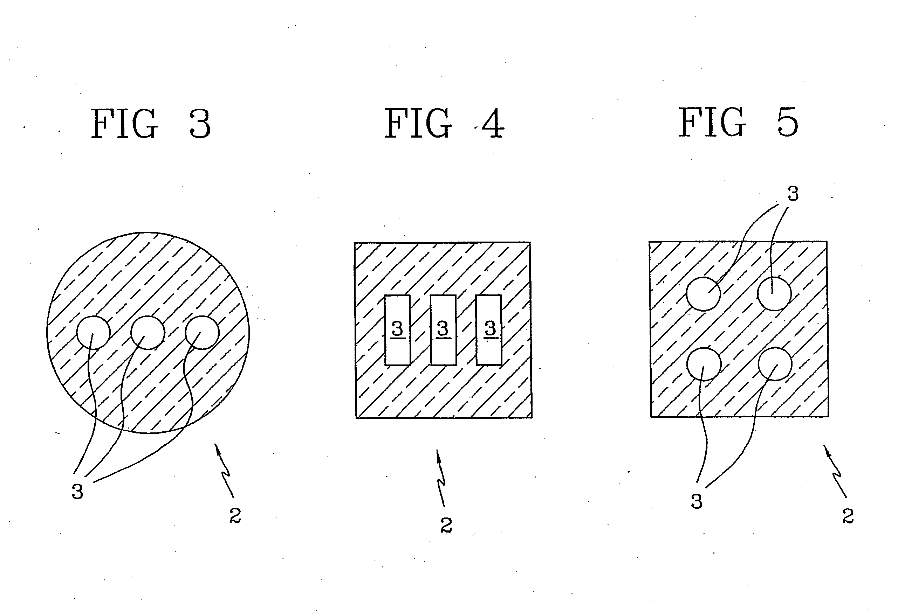

In a wholly similar way it is possible to obtain different embodiments of a wholly transparent mould 2 as illustrated in Figures 3 to 5 and in any event in accordance with other embodiments not illustrated and corresponding combinations. For example, using a container 1 comprising a plurality of inserts 5 it is possible to obtain a mould 2 having a plurality of cavities 4. Figure 3 in particular illustrates a cylindrical mould 2 having three cylindrical cavities 4 in line extending parallel to each other in as many directions. Figure 4 illustrates a mould 2 having a substantially square cross section with three cavities of rectangular cross section in line and extending in directions parallel to each other. Finally, Figure 5 illustrates a mould 2 having a substantially square cross section with four parallel cylindrical cavities arranged alongside the corners of a square.

When an insert 5 is present, gelling stage d) also provides for an operation of extracting insert 5 from the sol as it is gelling. The removal of inserts 5 has proved to be a quite complex operation in that, while it is forming from the sol, the gel has a "syneresis" stage, that is a stage during which the material of which it is formed "migrates" in the direction of the centre of mass thus reducing its volume. It is obvious that in this situation any inserts 5 present will tend to be tightly gripped by the forming gel, which has a gelatinous and not very strong consistency. It is therefore necessary to remove these inserts 5 before they are excessively gripped by the gel, but in any event not before the gel has developed sufficient robustness to be able to support the presence of an internal cavity 4. It is therefore necessary to remove each insert 5 at a well-specified time in order to avoid irreversible damage to the gel which would compromise its integrity.

For this purpose it is possible to cause container 1 to rotate, preferably about an axis of symmetry of insert 5 which has to be removed, in order to assist removal of said insert 5 making use of the occurrence of centrifugal forces acting on the gelling sol, as illustrated in the known art (US 6,799,442).

In a further version it may be convenient to prepare cylindrical mould 2 completely on the basis of the centrifugal force acting on the sol located in a suitable horizontal cylindrical container which is caused to rotate rapidly axially as described in the known art (US 4,680,045).

In this arrangement the sol, whose volume occupies a predetermined fraction of the volume of the container, under the effect of the centrifugal force adopts the cylindrical shape of the container bounded externally by the inner surface of the container, and internally by the equipotential surface, which is also cylindrical, perpendicular to the centrifugal force field present during the gelling stage.

The process and device described above make it possible to obtain moulds which are wholly transparent to UV rays. Figure 2 also indicates, diagrammatically in that it is known, a localized source of UV rays through the number 6. It is however advantageous to use one or more sources 6 of UV rays which are distributed over and face the entire periphery of mould 2 to generate uniform irradiation of all the material which has to be formed and polymerized.

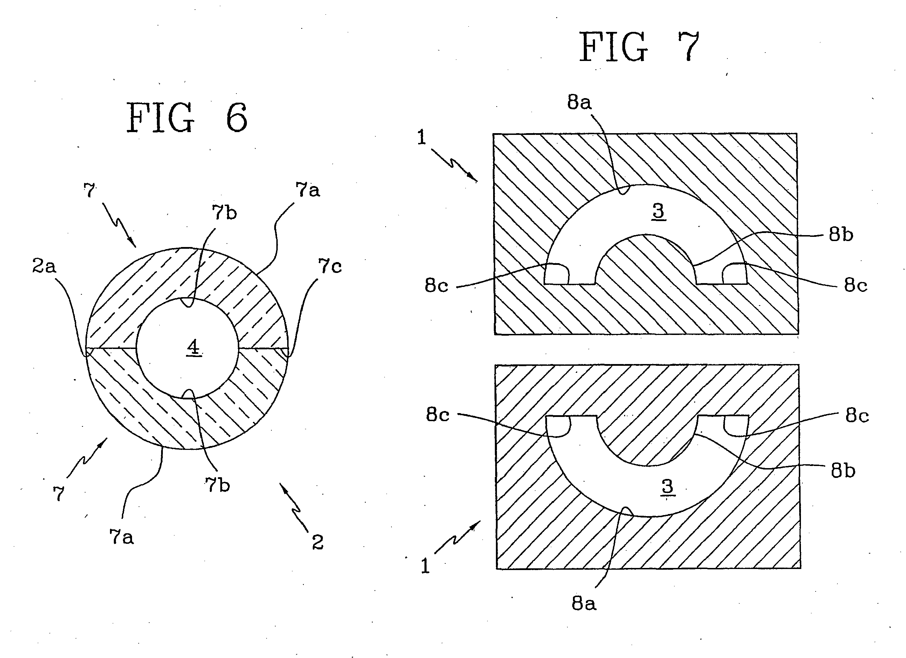

In another embodiment, illustrated in Figure 6, mould 2 is made of two half-moulds 7 which are transparent to UV rays and identical to each other in such a way that they can be placed together accurately obtaining a wholly transparent mould 2. As may be seen from Figure 7, in order to make the two half-moulds 7 two identical containers 1 are required, each of which has internally a chamber 3 defining a first hemicylindrical surface 8a which is substantially a negative of an outer hemicylindrical surface 7a of half-mould 7 being manufactured, a second hemicylindrical surface 8b which is substantially a negative of an inner hemicylindrical surface 7b of half-mould 7 and two flat closure surfaces 8b in the form of negatives of two flat contact surfaces 7c in each half-mould 7 to allow the two half-moulds 7 to be mated together. Advantageously in this case it is not necessary to attach inserts 5 within chamber 3.

It is however possible to use a single container to consecutively make the two half-moulds 7.

In accordance with embodiments not illustrated here the process described can be extended to the manufacture of wholly transparent moulds 2. also comprising more than two transparent portions 2a joined together.

As described in the following two embodiments it is also possible to manufacture a mould 2 comprising a portion 2a transparent to UV rays made using the solgel process described and a portion 9 which is not transparent to UV rays. This portion 9 which is not transparent to UV rays may be manufactured using conventional materials, for example metal, and may also be machined using machine tools. Advantageously, furthermore, a surface 9a of this non-transparent portion 9 facing the product which has to be shaped and polymerized may be coated with a reflecting material 10 for reasons which will be specified below.

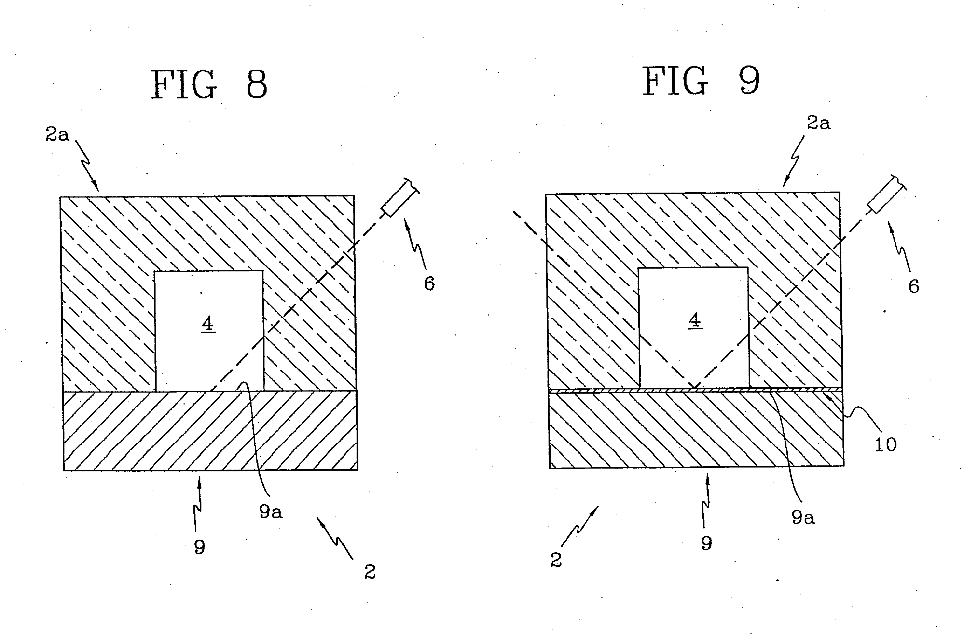

Figure 8 illustrates a particular embodiment comprising a half-mould transparent to UV rays (corresponding to previously mentioned transparent portion 2a) and a half-mould 9 which is not transparent to UV rays. The two half-moulds define cavity 4 for passage of the material being shaped and polymerized. In this configuration the UV rays originate from one or more sources 6 of UV rays facing the transparent half-mould and are directed towards the interior of mould 2, in particular towards cavity 4.

In a further embodiment illustrated in Figure 9, an inner surface 9a of non-transparent half-mould 9 facing cavity 4 and therefore, in the working condition, the product being shaped and polymerized, is coated with a reflecting material 10, for example a film of aluminium 10. This makes it possible to reflect any UV rays which are otherwise dispersed towards the product and therefore increase the polymerizing efficiency of mould 2.

It is also possible to use moulds 2 obtained as described above in accordance with the process of manufacture to carry out processes having industrial applications in which it is convenient to polymerize the working material through UV rays.

In particular attention is focused on the processes of pultrusion, extrusion and moulding mentioned previously.

A non-restrictive embodiment of a pultrusion process comprises the following stages:
- preparing a predetermined number of continuous fibres, for example glass or carbon fibres, constituting a high strength portion of the final product,
- providing a mould 2 at least partly transparent to UV rays using the process previously described and having a through cavity 4 shaped to plastically deform the continuous fibres,
- impregnating the continuous fibres with a suitable preferably thermohardening resin,
- causing the continuous fibres so impregnated to pass through mould 2,
- polymerizing the continuous fibres by means of UV rays as they pass through mould 2.

For the industrial application of such a pultrusion process a plurality of continuous fibres, of glass or carbon for example, is provided forming a preferably parallel bundle. These fibres are impregnated with a thermohardening resin, generally a polyester resin. Impregnation of the fibres may for example take place by causing each fibre to pass over one or more rollers impregnated with that resin. It is also possible for the bundle of fibres to be externally bounded by at least one coating layer. The coating layer must however be transparent to at least the UV rays so that polymerization of the fibres through UV rays can take place and therefore justify the use of a mould 2 which is at least partly transparent to UV rays.

The bundle of impregnated fibres is then delivered to mould 2. In particular the fibres are forcibly introduced into mould 2 by exerting a pulling force in a direction of progress.

In mould 2 the fibres converge and are coated by the coating layers if these are present, giving rise to a composite material. These may also be provided for subsequent compacting of the fibres. In addition to this means may also subsequently be used to shape or dimension the compacted composite material.

A non-restrictive embodiment of an extrusion process comprises the following stages:
- preparing a material which has to be extruded,
- providing a mould 2 which is at least partly transparent to UV rays using the process previously described, having a through cavity 4 shaped to plastically deform the material being extruded,
- the provision of thrust means to force the material being extruded to pass through mould 2,
- application of a thrust in the direction of the mould to the material being extruded,
- forcing the material being extruded to pass through mould 2 imposing plastic deformation on the material being extruded during its passage through mould 2,
- polymerizing the material through UV rays as it passes through the mould.

Similarly to the pultrusion process, in an extrusion process a mould 2 which is at least partly transparent to UV rays manufactured as described previously is provided.

The material being extruded preferably belongs to the group comprising materials based on silicone and there is provision for the addition of a catalyst, for example a thermohardening catalyst, to polymerize the material being moulded when it is exposed to UV rays. The material which is to be extruded is also preferably present' in a semi-liquid state or in any event has sufficient malleability to be plastically deformed.

Thrust means to force the material being extruded to pass through mould 2 are also provided. In this respect the mould must have a through cavity 4 shaped to plastically deform the material being extruded.

The thrust means may be provided by means of pistons or rotary screws.

A thrust in the direction of mould 2 is therefore applied to the material being extruded by the thrust means, forcing it to pass through mould 2 and imposing plastic deformation upon it.

While the material being extruded passes through mould 2 it is exposed to UV rays which activate its polymerization.

A non-restrictive embodiment of a moulding process comprises the following stages:
- preparing a material which is to be moulded, providing through the process previously described two half-moulds which can be joined together, of which at least one is transparent to UV rays, internally defining a cavity 4 which can be wholly exposed to UV rays,
- joining the two half-moulds,
- inserting the material which has to be moulded within cavity 4,
- polymerizing the material through UV rays while it is within cavity 4.

Similarly to the pultrusion and extrusion processes, in a moulding process a mould which is at least partly transparent to UV rays manufactured in accordance with what has been described previously is provided. The mould is constructed as at least two portions which can be joined together, of which at least one is transparent to UV rays, and defines within it a cavity 4 which can be wholly exposed to UV rays.

The material which has to be moulded preferably belongs to the group of materials based on silicone and rubbers and provision is made for the addition of a catalyst, for example a thermohardening catalyst, to polymerize the material being moulded when exposed to UV rays. The material being moulded is also preferably present in a semi-liquid state or in any event has sufficient malleability to be forced to fill the cavity present within the mould.

The process provides for insertion of the material to be moulded within cavity 4. This takes place preferably through at least one hole made in at least one portion of the mould through which it is injected under pressure within cavity 4. The material being moulded is then forced to match the shape of cavity 4.

Once injection has taken place it is then possible to polymerize the material by exposing it to UV rays while it is still in cavity 4.

Obviously the mould used may be used for the injection moulding of thermohardening materials.

In addition to this the technology mentioned above also makes possible the compression moulding of thermohardening material.

It should also be noted that inserts, for example of metal, but advantageously also of quartz, may be positioned within the mould in order to be able to obtain hollow pieces.

This invention provides major advantages.

First of all the use of moulds which are transparent to UV rays makes it possible to polymerize the material being formed by UV rays while it still lies in the mould and this appreciably reduces processing times, in particular because of the possibility of using UV rays whose polymerizing action is appreciably faster than in the case where heated moulds are used. This has the advantageous effect of substantially increasing the productivity of production plants such as, as in the examples mentioned, pultrusion, extrusion and moulding plants.

In addition to this, the material which has to be shaped and polymerized may be advantageously exposed to UV rays while it is in movement within the mould, thus bringing about the advantage of regularizing production and further increasing productivity.

A further advantage is provided by reducing the production costs of the moulds, in that the sol-gel process for the manufacture of moulds transparent to UV provides as a result moulds having a surface which is defined with high accuracy and which does not require any further machining by machine tools. Economic advantage also lies in the fact that the substantial increase in productivity also has a positive effect in a tangible reduction in costs per unit product, in particular fixed costs, including the costs of making the moulds.

These moulds are subject to shrinkage during the stages of gelling, drying and sintering, but the amount of such reduction in size is considered in advance by suitably increasing the initial dimensions of the chamber which contains the sol. The final effect is therefore that of obtaining moulds with high dimensional accuracy and high transparency and sharpness.

Finally, the manufacture of moulds by the sol-gel technique substantially reduces the mass of such moulds, solving the problems arising in logistics from heavy metal moulds.

## Claims

1. Sol-gel process for the manufacture of moulds having at least one portion transparent to UV rays, comprising the following stages:
a) providing a container (1) which is a negative of the said at least one portion (2a) transparent to UV of the mould (2) which is to be manufactured and internally defining a chamber (3), the said chamber (3) having at least one first surface (3a) which is substantially the negative of a corresponding outer surface (2b) of the said at least one transparent portion (2a) of the mould (2) being manufactured, and at least one second surface (3b) which is substantially a negative of at least one corresponding inner surface (2c) of the said at least one transparent portion (2a) of the mould (2) being manufactured,;
b) filling the chamber (3) with a sol;
c) gelling the sol, obtaining the so-called gel;
d) heating the gel and a corresponding solvent for a programmed period of time consequently achieving predetermined temperature and pressure values preferably higher than the critical values for the solvent present in the gel, and evaporation of the said solvent, the said heating giving rise to drying of the gel;
e) densification and/or sintering of the dried gel through heating to a predetermined temperature, preferably higher than the temperature at which drying stage d) takes place, with the consequent formation of the said transparent portion (2a) of the mould, with a vitreous consistency and transparent to at least UV rays, the said mould being suitable for the formation of pultrusion and/or extrusion products and/or the moulding of plastics materials through a process of photocatalytic synthesis **characterized in that** the container (1) comprises at least one insert (5) defining the said at least one second surface (3b) of the chamber (3).

2. Process according to Claim 1, in which the outer surface (2b) of the said at least one transparent portion (2a) of the mould (2) being manufactured faces the external environment in the operating condition of the mould (2) and allows UV rays to pass towards the interior, while the inner surface (2c) of the said at least one transparent portion (2a) of the mould (2) is in the operating condition in contact with the product being formed and polymerized.

3. Process according to Claim 1 or 2, in which the said at least one insert (5) is incompressible.

4. Process according to any one of claims 1-3, in which the said at least one insert (5) is cylindrical.

5. Process according to any one of Claims 2-4, in which stage d) of gelling the sol comprises an operation of extraction of the said at least one insert (5).

6. Process according to Claim 5, in which extraction of the said at least one insert (5) takes place at a predetermined time in the gelling stage to prevent the formation of cracks in the forming gel.

7. Process according to Claim 5 or 6, in which the container (1) is caused to rotate to assist extraction of the said at least one insert (5) making use of the centrifugal forces acting on the forming gel.

8. Process according to any one of the preceding claims, in which the container (1) is caused to rotate axially so that, under the effect of the centrifugal force, the sol adopts the shape of the container bounded externally by the inner surface of the container and internally by the equipotential surface at right angles to the centrifugal force field.

9. Process according to any one of Claims 1-8, in which the container (1) comprises a plurality of inserts (5).

10. Process according to any one of the preceding claims, in which stage b) is preceded by the following stages: - preparation of an aqueous or water/alcohol suspension containing at least one metal alkoxide, effecting hydrolysis of the above suspension, obtaining the sol.

11. Process according to any one of the preceding claims, in which a phase c') in which the solvent is replaced with an aprotic solvent is included between stage c) and stage d).

12. Process according to Claim 11, in which a stage c' ') in which the gel is placed in an autoclave and subjected to a flow of inert gas is included between stage c') and stage d).

13. Process according to Claim 12, in which a stage d') of depressurization of the autoclave with a consequent escape of vapours, with possible recovery of the said vapours, is included between stage d) and stage e).

14. Process according to Claim 13, in which a stage d") which consists of flowing an inert gas through the autoclave containing the gel is included between stage d') and stage e).

15. Process according to Claim 14, in which a stage d"') which comprises cooling the dried gel and removing it from the autoclave is included between stage d") and stage e).

16. Process according to any one of the preceding claims, in which the aprotic solvent used in stage c') is selected from the group comprising acetone, dioxan and hydrofuran.

17. Process according to any one of Claims 1-16, in which stage a) also comprises the operation of positioning and attaching at least one insert (5) within the chamber (3).

18. Process according to any one of the preceding claims, in which the mould (2) is wholly transparent to UV rays.

19. Process according to any one of the preceding claims, in which the mould (2) comprises a portion (2a) which is transparent to at least UV rays and a portion (9) which is not transparent to UV rays.

20. Process according to Claim 19, in which the mould (2) comprises a half-mould 2a) which is transparent to at least UV rays and a half-mould (9) which is not transparent to UV rays.

21. Process according to Claim 19, in which a surface (9a) of the said portion (9) which is not transparent to UV rays, facing the product being formed, is coated with a reflecting material (10).

22. Process according to Claim 21, in which the reflecting material (10) is an aluminum film (10).

23. Pultrusion process, comprising the following stages: - preparing a predetermined number of continuous fibers, providing a mould (2) which is transparent to UV rays using the procedure according to Claim 1, the said mould (2) having a through cavity (4) shaped to plastically deform the said continuous fibres, impregnating the said continuous fibres with a suitable preferably thermohardening resin, causing the said continuous fibres so impregnated to pass through the mould (2), polymerizing the said continuous fibres through UV rays as they pass through the mould (2).

24. Extrusion process, comprising the following stages: preparing a material for extrusion, providing a mould (2) which is transparent to at least UV rays using the process according to Claim 1, the said mould (2) having a through cavity (4) shaped to plastically deform the material being extruded, providing thrust means to force the material being extruded to pass through the mould (2), application of a thrust in the direction of the mould (2) to the material being extruded, forcing the material being extruded to pass through the mould (2) imposing plastic deformation on the material being extruded as it passes through the mould (2), polymerizing the material by exposing it to UV rays as it passes through the mould (2).

25. Extrusion process according to Claim 24, in which the material being extruded belongs to the group comprising materials based on silicone and rubber.

26. Extrusion process according to Claim 24 or 25, in which a preferably thermohardening catalyst is added to the material being extruded to polymerize the material being extruded when it is exposed to UV rays.

27. Moulding process, comprising the following stages:
- preparing a material for moulding,
- providing a mould (2) comprising at least two mating portions of which at least one is transparent to UV rays using the process according to Claim 1, the said mould (2) defining internally a cavity (4) which can be wholly exposed to UV rays, joining the said portions of the mould (2), inserting the material to be moulded within the cavity (4), - polymerizing the material by exposing it to UV rays while it is within the cavity (4).

28. Moulding process according to Claim 27, in which the material being moulded belongs to the group comprising materials based on silicone and rubber, or thermohardening materials.

29. Moulding process according to Claim 26 or 27, in which a preferably thermohardening catalyst is added to the material being moulded to polymerize the material being moulded when it is exposed to UV rays.

30. Moulding process according to Claim 27, **characterized in that** it comprises injection or compression moulding.

## Patentansprüche

1. Sol-Gel-Verfahren zur Herstellung von Formkörpern, aufweisend mindestens einen für UV-Strahlen durchlässigen Abschnitt, umfassend folgende Phasen:
a) Bereitstellen eines Behälters (1), der ein Negativ des mindestens einen, für UV-Strahlen durchlässigen Abschnitts (2a) des herzustellenden Formkörpers (2) ist, und innenseitig definierend eine Kammer (3), wobei diese Kammer (3) mindestens eine erste Oberfläche (3a) aufweist, die im Wesentlichen das Negativ einer entsprechenden äußeren Oberfläche (2b) des mindestens einen durchlässigen Abschnitts (2a) des herzustellenden Formkörpers (2) ist, und mindestens eine zweite Oberfläche (3b), die im Wesentlichen ein Negativ der mindestens einen entsprechenden inneren Oberfläche (2c) des mindestens einen durchlässigen Abschnitts (2a) des herzustellenden Formkörpers (2) ist;
b) Füllen der Kammer (3) mit einem Sol;
c) Gelieren des Sols, wodurch das sog. Gel erhalten wird;
d) Erhitzen des Gels und eines entsprechenden Lösungsmittels für einen programmierten Zeitraum, folglich erhaltend vorgegebene Temperatur- und Druckwerte, die vorzugsweise über den für das im Gel enthaltene Lösungsmittel kritischen Werten liegen, und Verdampfung des Lösungsmittels, wobei das Erhitzen zum Trocknen des Gels führt;
e) Verdichten und/oder Sintern des getrockneten Gels durch Erhitzen auf eine vorgegebene Temperatur, die vorzugsweise über der Temperatur liegt, bei der die Trocknungsphase d) stattfindet, mit entsprechender Bildung des durchlässigen Abschnitts (2a) des Formkörpers mit einer glasartigen Beschaffenheit und durchlässig zumindest für UV-Strahlen, wobei der Formkörper geeignet ist für die Bildung von Pultrusions- und/oder Extrusionsprodukten und/oder zum Formen von Kunststoffmaterialien anhand eines Verfahrens der photokatalytischen Synthese, **dadurch gekennzeichnet, dass** der Behälter (1) mindestens einen Einsatz (5) umfasst, definierend die mindestens eine zweite Oberfläche (3b) der Kammer (3).

2. Verfahren nach Anspruch 1, wobei die äußere Oberfläche (2b) des mindestens einen durchlässigen Abschnitts (2a) des hergestellten Formkörpers (2) der äußeren Umgebung im Betriebszustand des Formkörpers (2) zugewandt ist und den UV-Strahlen ermöglicht, zur Innenseite durchzudringen, während die innere Oberfläche (2c) des mindestens einen durchlässigen Abschnitts (2a) des Formkörpers (2) im Betriebszustand mit dem geformten und polymerisierten Produkt in Kontakt ist.

3. Verfahren nach Anspruch 1 oder 2, wobei der mindestens eine Einsatz (5) nicht komprimierbar ist.

4. Verfahren nach einem der Ansprüche 1-3, wobei der mindestens eine Einsatz (5) zylindrisch ist.

5. Verfahren nach einem der Ansprüche 2-4, wobei die Phase d) des Gelierens des Sols einen Vorgang zum Herausziehen des mindestens einen Einsatzes (5) umfasst.

6. Verfahren nach Anspruch 5, wobei das Herausziehen des mindestens einen Einsatzes (5) zu einem vorgegebenen Zeitpunkt in der Gelierphase stattfindet, um die Bildung von Rissen im sich bildenden Gel zu vermeiden.

7. Verfahren nach Anspruch 5 oder 6, wobei der Behälter (1) in Drehung versetzt wird, um das Herausziehen des mindestens einen Einsatzes (5) zu unterstützen, indem die auf das sich bildende Gel wirkende Zentrifugalkraft genutzt wird.

8. Verfahren nach einem der vorhergehenden Ansprüche, wobei der Behälter (1) in axiale Drehung versetzt wird, sodass das Sol unter der Wirkung der Zentrifugalkraft die Form des Behälters annimmt, außenseitig durch die innere Oberfläche des Behälters und innenseitig durch die äquipotenziale Oberfläche in rechten Winkeln zum Zentrifugalkraftfeld begrenzt.

9. Verfahren nach einem der Ansprüche 1-8, wobei der Behälter (1) eine Vielzahl von Einsätzen (5) umfasst.

10. Verfahren nach einem der vorhergehenden Ansprüche, wobei vor der Phase b) folgende Phasen stattfinden:-Vorbereiten einer wässrigen oder Wasser-/Alkoholsuspension, enthaltend mindestens ein Metallalkoxid, Bewirken der Hydrolyse der Suspension, Erhalten des Sols.

11. Verfahren nach einem der vorhergehenden Ansprüche, wobei eine Phase c'), in der das Lösungsmittel durch ein aprotisches Lösungsmittel ersetzt wird, zwischen Phase c) und Phase d) eingeschlossen ist.

12. Verfahren nach Anspruch 11, wobei eine Phase c'), in der das Gel in einen Autoklav gegeben und einer Strömung von Inertgas ausgesetzt wird, zwischen Phase c') und Phase d) eingeschlossen ist.

13. Verfahren nach Anspruch 12, wobei eine Phase d') der Druckentlastung des Autoklavs mit einer entsprechenden Entweichung von Dämpfen mit der möglichen Rückgewinnung dieser Dämpfe zwischen Phase d) und Phase e) eingeschlossen ist.

14. Verfahren nach Anspruch 13, wobei eine Phase d"), die aus dem Strömen eines Inertgases durch den Autoklav, enthaltend das Gel, besteht, zwischen Phase d') und Phase e) eingeschlossen ist.

15. Verfahren nach Anspruch 14, wobei eine Phase d"'), die das Kühlen des getrockneten Gels und dessen Entfernen aus dem Autoklav umfasst, zwischen Phase d") und Phase e) eingeschlossen ist.

16. Verfahren nach einem der vorhergehenden Ansprüche, wobei das in Phase c') eingesetzte aprotische Lösungsmittel ausgewählt wird aus der Gruppe, umfassend Aceton, Dioxan und Hydrofuran.

17. Verfahren nach einem der Ansprüche 1-16, wobei Phase a) auch den Vorgang des Positionierens und Anbringens des mindestens einen Einsatzes (5) in der Kammer (3) umfasst.

18. Verfahren nach einem der vorhergehenden Ansprüche, wobei der Formkörper (2) vollständig für UV-Strahlen durchlässig ist.

19. Verfahren nach einem der vorhergehenden Ansprüche, wobei der Formkörper (2) einen Abschnitt (2a) umfasst, der mindestens für UV-Strahlen durchlässig ist, und einen Abschnitt (9), der nicht für UV-Strahlen durchlässig ist.

20. Verfahren nach Anspruch 19, wobei der Formkörper (2) eine Halbform (2a) umfasst, die mindestens für UV-Strahlen durchlässig ist, und eine Halbform (9), die nicht für UV-Strahlen durchlässig ist.

21. Verfahren nach Anspruch 19, wobei eine Oberfläche (9a) des Abschnitts (9), die nicht für UV-Strahlen durchlässig ist und dem geformten Produkt zugewandt ist, mit einem reflektierenden Material (10) beschichtet ist.

22. Verfahren nach Anspruch 21, wobei es sich beim reflektierenden Material (10) um einen Aluminiumfilm (10) handelt.

23. Pultrusionsverfahren, umfassend die folgenden Phasen: - Vorbereiten einer vorgegebenen Zahl an Endlosfasern, Bereitstellen eines Formkörpers (2), der für UV-Strahlen durchlässig ist, unter Nutzung des Verfahrens nach Anspruch 1, wobei der Formkörper (2) einen Durchgangshohlraum (4) aufweist, geformt, um die Endlosfasern plastisch zu verformen, Imprägnieren der Endlosfasern mit einem geeigneten, vorzugsweise duroplastischen Harz, Führen der so imprägnierten Endlosfasern durch den Formkörper (2), Polymerisieren der Endlosfasern durch UV-Strahlen, während sie durch den Formkörper (2) geführt werden.

24. Extrusionsverfahren, umfassend die folgenden Phasen: Vorbereiten eines Materials für die Extrusion, Bereitstellen eines Formkörpers (2), der mindestens für UV-Strahlen durchlässig ist, unter Nutzung des Verfahrens nach Anspruch 1, wobei der Formkörper (2) einen Durchgangshohlraum (4) aufweist, geformt, um das extrudierte Material plastisch zu verformen, Bereitstellen von Druckmitteln, um dafür zu sorgen, dass das extrudierte Material durch den Formkörper (2) geführt wird, Anwenden eines Drucks in Richtung des Formkörpers (2) auf das extrudierte Material, um das extrudierte Material durch den Formkörper (2) zu führen, wobei das extrudierte Material, während es durch den Formkörper (2) geführt wird, plastisch verformt wird, Polymerisieren des Materials, indem es UV-Strahlen ausgesetzt wird, während es durch den Formkörper (2) geführt wird.

25. Extrusionsverfahren nach Anspruch 24, wobei das extrudierte Material zu der Gruppe gehört, umfassend Materialien auf Silikon- und Kautschukbasis.

26. Extrusionsverfahren nach Anspruch 24 oder 25, wobei dem extrudierten Material ein vorzugsweise duroplastischer Katalysator hinzugefügt wird, um das extrudierte Material zu polymerisieren, wenn es UV-Strahlen ausgesetzt wird.

27. Formverfahren, umfassend folgende Phasen:
- Vorbereiten eines Materials zum Formen;
- Bereitstellen eines Formkörpers (2), umfassend mindestens zwei zusammenpassende Abschnitte, von denen mindestens einer für UV-Strahlen durchlässig ist, unter Nutzung des Verfahrens nach Anspruch 1, wobei der Formkörper (2) innenseitig einen Hohlraum (4) definiert, der vollständig UV-Strahlen ausgesetzt werden kann, Verbinden der Abschnitte des Formkörpers (2), Einsetzen des zu formenden Materials in den Hohlraum (4), - Polymerisieren des Materials, indem dieses UV-Strahlen ausgesetzt wird, während es sich im Hohlraum (4) befindet.

28. Formverfahren nach Anspruch 27, wobei das geformte Material zu der Gruppe gehört, umfassend Materialien auf Silikon- und Kautschukbasis oder duroplastische Materialien.

29. Formverfahren nach Anspruch 26 oder 27, wobei dem geformten Material ein vorzugsweise duroplastischer Katalysator hinzugefügt wird, um das geformte Material zu polymerisieren, wenn es UV-Strahlen ausgesetzt wird.

30. Formverfahren nach Anspruch 27, **dadurch gekennzeichnet, dass** es Spritzgieß- oder Pressformen umfasst.

## Revendications

1. Procédé sol-gel pour la fabrication de moules ayant au moins une partie transparente aux rayons ultraviolets, comprenant les étapes suivantes :
a) prévoir un récipient (1) étant un négatif de ladite au moins une partie (2a) transparente aux rayons ultraviolets du moule (2) devant être fabriqué et définissant à l'intérieur une chambre (3), ladite chambre (3) ayant au moins une première surface (3a) étant substantiellement le négatif d'une surface extérieure correspondante (2b) de ladite au moins une partie transparente (2a) du moule (2) à fabriquer, et au moins une seconde surface (3b) étant substantiellement un négatif d'au moins une surface intérieure correspondante (2c) de ladite au moins une partie transparente (2a) du moule (2) à fabriquer ;
b) remplir la chambre (3) avec un sol ;
c) gélifier le sol, pour obtenir le communément appelé gel ;
d) chauffer le gel et un solvant correspondant pendant une durée programmée pour obtenir, par conséquence, des valeurs de pression et de température prédéfinies de préférence plus élevées que les valeurs critiques du solvant présent dans le gel, ainsi que l'évaporation dudit solvant, ledit chauffage aboutissant au séchage du gel ;
e) densification et/ou frittage du gel séché par chauffage à une température prédéfinie, de préférence supérieure à celle prévue lors de la phase de séchage d), aboutissant à la formation de ladite partie transparente (2a) du moule présentant une consistance vitreuse et transparente au moins aux rayons ultraviolets, ledit moule étant adapté à la formation de produits par pultrusion et/ou extrusion et/ou au moulage de matériaux plastiques par le biais d'un procédé de synthèse photocatalytique **caractérisé en ce que** le récipient (1) comprend au moins une insertion (5) définissant ladite au moins une seconde surface (3b) de la chambre (3).

2. Procédé selon la revendication 1, dans lequel la surface extérieure (2b) de ladite au moins une partie transparente (2a) du moule (2) à fabriquer fait face à l'environnement extérieur dans la condition de fonctionnement du moule (2) et permet aux rayons ultraviolets de passer à l'intérieur, alors que la surface intérieure (2c) de ladite au moins une partie transparente (2a) du moule (2) se trouve, dans la condition de fonctionnement, en contact avec le produit étant formé et polymérisé.

3. Procédé selon les revendications 1 ou 2, dans lequel ladite au moins une insertion (5) est incompressible.

4. Procédé selon l'une quelconque des revendications 1-3, dans lequel ladite au moins une insertion (5) est cylindrique.

5. Procédé selon l'une quelconque des revendications 2-4, dans lequel la phase d) de gélification du sol comprend une opération d'extraction de ladite au moins une insertion (5).

6. Procédé selon la revendication 5, dans lequel l'extraction de ladite au moins une insertion (5) se déroule à un moment prédéfini au cours de la phase de gélification pour empêcher la formation de fissures dans le gel en formation.

7. Procédé selon les revendications 5 ou 6, dans lequel le récipient (1) est forcé à tourner pour aider à l'extraction de ladite au moins une insertion (5) en faisant usage des forces centrifuges agissant sur le gel en formation.

8. Procédé selon l'une quelconque des revendications précédentes, dans lequel le récipient (1) est forcé à tourner axialement de sorte que, sous l'effet de la force centrifuge, le sol adopte la forme du récipient lié extérieurement par la surface intérieure du récipient et intérieurement par la surface équipotentielle orthogonale au champ de force centrifuge.

9. Procédé selon l'une quelconque des revendications 1-8, dans lequel le récipient (1) comprend une pluralité d'insertions (5).

10. Procédé selon l'une quelconque des revendications précédentes, dans lequel la phase b) est précédée par les phases suivantes : - préparation d'une suspension aqueuse ou d'eau/d'alcool contenant au moins un alcoxyde métallique, effectuant l'hydrolyse de la susdite suspension pour obtenir le sol.

11. Procédé selon l'une quelconque des revendications précédentes, dans lequel une phase c'), dans laquelle le solvant est remplacé par un solvant aprotique, est incluse entre la phase c) et la phase d).

12. Procédé selon la revendication 11, dans lequel une phase c"), dans laquelle le gel placé dans un autoclave et soumis à un débit de gaz inerte, est incluse entre la phase c') et la phase d).

13. Procédé selon la revendication 12, dans lequel une phase d') de dépressurisation de l'autoclave entraînant l'émanation de vapeurs, avec possible récupération desdites vapeurs, est incluse entre la phase d) et la phase e).

14. Procédé selon la revendication 13, dans lequel une phase d"), consistant à injecter un gaz inerte dans l'autoclave contenant le gel, est incluse entre la phase d') et la phase e).

15. Procédé selon la revendication 14, dans lequel une phase d"'), comprenant le refroidissement du gel séché et son retrait de l'autoclave, est incluse entre la phase d") et la phase e).

16. Procédé selon l'une quelconque des revendications précédentes, dans lequel le solvant aprotique utilisé à la phase c') est sélectionné dans le groupe constitué par l'acétone, la dioxan et l'hydrofurane.

17. Procédé selon l'une quelconque des revendications 1-16, dans lequel la phase a) comprend aussi l'opération consistant à positionner et à fixer au moins une insertion (5) à l'intérieur de la chambre (3).

18. Procédé selon l'une quelconque des revendications précédentes, dans lequel le moule (2) est entièrement transparent aux rayons ultraviolets.

19. Procédé selon l'une quelconque des revendications précédentes, dans lequel le moule (2) comprend une partie (2a) étant transparente au moins aux rayons ultraviolets ainsi qu'une partie (9) n'étant pas transparente aux rayons ultraviolets.

20. Procédé selon la revendication 19, dans lequel le moule (2) comprend un demi moule (2a) étant transparent au moins aux rayons ultraviolets ainsi qu'un demi moule (9) n'étant pas transparent aux rayons ultraviolets.

21. Procédé selon la revendication 19, dans lequel une surface (9a) de ladite partie (9) n'étant pas transparente aux rayons ultraviolets, faisant face au produit à former, est revêtue d'un matériau réfléchissant (10).

22. Procédé selon la revendication 21, dans lequel le matériau réfléchissant (10) est un film d'aluminium (10).

23. Procédé de pultrusion, comprenant les phases suivantes : Préparer une quantité prédéfinie de fibres continues, prévoir un moule (2) étant transparent aux rayons ultraviolets en utilisant la procédure selon la revendication 1, ledit moule (2) ayant une cavité passante (4) présentant une forme pouvant déformer plastiquement lesdites fibres continues, imprégner lesdites fibres continues avec une résine appropriée de préférence thermodurcissable, provoquer le passage à travers le moule (2) desdites fibres continues dûment imprégnées, polymériser lesdites fibres continues aux rayons ultraviolets au moment de leur passage dans le moule (2).

24. Procédé d'extrusion, comprenant les phases suivantes : préparer un matériau destiné à l'extrusion, prévoir un moule (2) étant transparent au moins aux rayons ultraviolets en utilisant le procédé selon la revendication 1, ledit moule (2) ayant une cavité passante (4) présentant une forme pouvant déformer plastiquement le matériau à extruder, prévoir des moyens de poussée pour forcer le matériau à extruder à passer dans le moule (2), appliquer une poussée dans la direction du moule (2) sur le matériau à extruder, forcer le matériau à extruder à passer dans le moule (2) en imposant une déformation plastique sur le matériau à extruder au moment de son passage dans le moule (2), polymériser le matériau en l'exposant aux rayons ultraviolets au moment de son passage dans le moule (2).

25. Procédé d'extrusion selon la revendication 24, dans lequel le matériau à extruder appartient au groupe comprenant des matériaux à base de silicone et de caoutchouc.

26. Procédé d'extrusion selon les revendications 24 ou 25, dans lequel un catalyseur de préférence thermodurcissable est ajouté au matériau à extruder pour polymériser le matériau à extruder lorsqu'il est exposé aux rayons ultraviolets.

27. Procédé de moulage, comprenant les phases suivantes :
- préparer un matériau à mouler,
- prévoir un moule (2) comprenant au moins deux parties conjuguées desquelles au moins une est transparente aux rayons ultraviolets en utilisant le procédé selon la revendication 1, ledit moule (2) définissant à l'intérieur une cavité (4) pouvant être totalement exposée aux rayons ultraviolets, assembler lesdites parties du moule (2), insérer le matériau à mouler à l'intérieur de la cavité (4), - polymériser le matériau en l'exposant aux rayons ultraviolets alors qu'il se trouve à l'intérieur de la cavité (4).

28. Procédé de moulage selon la revendication 27, dans lequel le matériau à mouler appartient au groupe comprenant des matériaux à base de silicone et de caoutchouc ou des matériaux thermodurcissables.

29. Procédé de moulage selon les revendications 26 ou 27, dans lequel un catalyseur de préférence thermodurcissable est ajouté au matériau à mouler pour polymériser le matériau à mouler lorsqu'il est exposé aux rayons ultraviolets.

30. Procédé de moulage selon la revendication 27, **caractérisé en ce qu'**il comprend un moulage par injection ou par compression.
